# EUROPÄISCHE PATENTANMELDUNG

(11) **EP 3 940 858 A1**
(43) Veröffentlichungstag der Anmeldung: **19.01.2022**
(21) Anmeldenummer: 20186137.4
(22) Anmeldetag: 16.07.2020
(51) Int. Cl.: H01M 10/42, H01M 2/10, H01M 2/02, H01M 10/647, H01M 10/61, H02J 7/00

(54) **AKKUPACK MIT POUCHZELLE UND VERFAHREN**

(71) Anmelder: Hilti Aktiengesellschaft, 9494 Schaan (LI)
(72) Erfinder: Hauser, Klaus, 86830 Schwabmünchen (DE); Lepiorz, Matthias, 09112 Chemnitz (DE); Ender, Moses, 9470 Buchs (CH); Martiny, Nora, 82211 Herrsching-Breitbrunn (DE); Stanger, Robert, 87600 Kaufbeuren (DE); Ziegler, Bernd, 86830 Schabmünchen (DE); Sax, Kathrin, 86937 Scheuring (DE)
(74) Vertreter: Hilti Aktiengesellschaft Corporate Intellectual Property

(57) **Zusammenfassung**

Akkupack mit wenigstens zwei aufeinander gestapelten Pouchzellen, wobei jede der Pouchzellen in einer Metallfolie eingeschlossen ist, wobei die Metallfolien elektrisch voneinander isoliert sind und die Metallfolien, zwecks Messung einer durch die Metallfolien gebildeten Kondensator-Kapazität, jeweils elektrisch kontaktiert sind.

## Beschreibung

Die vorliegende Erfindung betrifft einen Akkupack mit wenigstens zwei aufeinander gestapelten Pouchzellen. Akkupacks sowie Pouchzellen sind grundsätzlich aus dem Stand der Technik bekannt. Ebenfalls aus dem Stand der Technik bekannt ist das Phänomen des sogenannten Swellings, auch Ausdehnen oder Aufblähen genannt. Dies ist problematisch, da es zu einem Aufplatzen einer Außenhülle der Pouchzelle führen kann. Dadurch kann wiederum der Akkupack selbst oder dessen Elektronik beschädigt werden, was zu einer Gefahr für den Benutzer führen kann.

Die europäische Patentanmeldung EP 3 591 739 A1 beschreibt ein Akkupack mit einer Pouchzelle, wobei der Akkupack wenigstens einen Stromunterbrecher aufweist, der ausgebildet ist eine Stromentnahme aus der Pouchzelle zumindest zeitweise zu unterbrechen, wobei der Stromunterbrecher durch ein Aufblähen der Pouchzelle ausgelöst wird.

Die europäische Patentanmeldung EP 3 588 607 A1 offenbart ein Akkupack mit wenigstens einer Pouchzelle, wobei der Akkupack wenigstens ein elektrisch leitfähiges Filament aufweist, das die Pouchzelle zumindest abschnittsweise derart umgibt oder begrenzt, dass ein Aufblähen der Pouchzelle ein Zertrennen des Filaments bewirkt.

Es ist Aufgabe der vorliegenden Erfindung ein alternativ ausgestalteten Akkupack zu schaffen, der die Grundlage für eine erhöhte Betriebssicherheit bietet.

Die Aufgabe wird dadurch gelöst, dass dass die Metallfolien elektrisch voneinander isoliert sind und die Metallfolien, zwecks Messung einer durch die Metallfolien gebildeten Kondensator-Kapazität, jeweils elektrisch kontaktiert sind.

Die Erfindung schließt die Erkenntnis ein, dass eine die Pouchzelle einhüllende Metallfolie - oder zumindest eine Folie mit metallischen Anteilen - als Elektrode eines Kondensators verwendet werden kann. Somit kann aus zwei oder mehr übereinander gestapelten Pouchzellen ein Kondensator, eine Parallelschaltung oder Serienschaltung von Kondensatoren aufgebaut werden. Eine durch den oder die Kondensatoren gebildete Kondensator-Kapazität Kapazität kann vorteilhafterweise mit einer geeigneten Kapazitätsmessschaltung gemessen werden. Durch Verformung der Zellen ändert sich der Abstand der Elektroden und somit die Kondensator-Kapazität. Eine Veränderung der Kapazität kann als Maß für das Swelling ein oder mehrerer Pouchzellen des Akkupacks ausgewertet werden. Das Swelling der Pouchzellen kann verschiedene Ausprägungen aufweisen. So ist es denkbar, dass sich ein mittlerer Abstand der Elektroden zueinander im Zuge des Swellings vergrößert. Anderenfalls ist es ebenfalls denkbar, dass sich ein mittlerer Abstand der Elektroden zueinander im Zuge des Swellings verkleinert. In beiden Fällen ist jedoch eine Änderung der Kondensator-Kapazität gegeben, die als Grundlage für eine kapazitive Detektion dienen kann.

In einer besonders bevorzugten Ausgestaltung sind die Metallfolien in Stapelrichtung durch einen Luftspalt voneinander beabstandet. Es hat sich als vorteilhaft herausgestellt, wenn in den Luftspalt ein Dielektrikum eingebracht ist. Das Dielektrikum kann beispielsweise ein keramisches Dielektrikum sein. Es hat sich als vorteilhaft herausgestellt, wenn das Dielektrikum ein Kunststoff, insbesondere ein temperaturbeständiger Kunstostoff ist. In einer besonders bevorzugten Ausgestaltung ist der Kunststoff ausgewählt aus der Gruppe: Polyethylenterephthalat (PET), Polyethylennaphthalat (PEN), Polyphenylensulfid (PPS), Polypropylen (PP), Polytetrafluorethylen (PTFE), Polystyrol (PS), Polycarbonat (PC). Es hat sich als vorteilhaft herausgestellt, wenn das Dielektrikum sandwichartig und/oder flächig zwischen den wenigstens zwei aufeinander gestapelten Pouchzellen angeordnet ist. Derart kann neben den erwünschten dielektrischen Eigenschaften auch eine Stabilisierung der Pouchzellen oder etwa ein Schutz gegen Stöße im Zuge der Verwendung des Akkupacks erreicht werden. Das Dielektrikum kann Teil einer Metall-Kunststoff-Verbundfolie sein.

In einer weiteren bevorzugten Ausgestaltung sind die Metallfolien jeweils als Metallverbundfolien, insbesondere als Aluminiumverbundfolie bereitgestellt. Es hat sich als vorteilhaft herausgestellt, wenn die einander zugewandten Seiten der Metallfolien jeweils eine Elektrode definieren. In einer weiteren bevorzugten Ausgestaltung sind die Elektroden voneinander beabstandet und elektrisch voneinander isoliert.

In einer besonders bevorzugten Ausgestaltung weist der Akkupack eine mit den Metallfolien elektrisch verbundene Kapazitätsmessschaltung auf. Die Kapazitätsmessschaltung kann in Form eines integrierten Schaltkreises bereitgestellt sein und/oder Teil eines Batteriemanagementsystems eines Akkupack oder einer elektrischen Handwerkzeugmaschine sein. Für den letztgenannten Fall kann Kapazitätsmessschaltung vollständig oder teileweise Teil der elektrischen Handwerkzeugmaschine selbst sein. Mittels der Kapazitätsmessschaltung kann vorteilhafterweise eine Kondensator-Kapazität zwischen den Elektroden gemessen werden. Es hat sich als vorteilhaft herausgestellt, wenn die Kondensator-Kapazität kontinuierlich überwacht wird. Alternativ kann die Kondensator-Kapazität diskontinuierlich überwacht sein, beispielweise regelmäßig bei Nutzungsaufnahme des Akkus oder bei bestimmten Lastfällen. In einer besonders bevorzugten Ausgestaltung ist der Akkupack und/oder ein Batteriemanagementsystem des Akkupacks dazu ausgebildet eine Stromentnahme aus dem Akkupack zu unterbrechen oder zu reduzieren, wenn sich der Wert der Kondensator-Kapazität um einen vorgegebenen Schwellwert ändert.

In einer weiteren bevorzugten Ausgestaltung weist der Akkupack eine Filterschaltung aufweist, die eingerichtet ist, eine durch Stoß und/oder Vibration induzierte Änderung der Kondensator-Kapazität herauszufiltern. Mit anderen Worten kann vorgesehen sein, dass eine an sich lediglich temporäre durch die Kapazitätsmessschaltung festgestellte Änderung der Kondensator-Kapazität durch ein etwaig vorgesehenes Batteriemanagementsystem unberücksichtigt bleibt. Es hat sich als vorteilhaft herausgestellt, wenn der Filter eingerichtet ist eine durch thermische Expansion induzierte, lediglich temporäre Änderung der Kondensator-Kapazität herauszufiltern.

In einer weiteren bevorzugten Ausgestaltung weist der Akkupack eine Mehrzahl aufeinander gestapelter Pouchzellen auf, wobei die Metallfolien zweier benachbarter Pouchzellen eine jeweilige Kondensator-Kapazität definieren. Die so gebildeten Kondensator-Kapazitäten können seriell oder parallel verkoppelt und mit der Kapazitätsmessschaltung verbunden sein. Alternativ kann für jede Paarung jeweils benachbarter Pouchzellen eine Kapazitätsmessschaltung vorgesehen sein.

Es hat sich als vorteilhaft herausgestellt, wenn der Akkupack zum Anschluss an eine elektrische Handwerkzeugmaschine ausgebildet ist. Vorteilhafterweise ist der Akkupack Teil eines Systems mit einer elektrischen Handwerkzeugmaschine.

Die Erfindung führt ebenfalls auf ein Verfahren zum Messen des Swellings einer Pouchzelle eines Akkupacks der vorbeschriebenen Art, wobei eine Änderung der zwischen den Metallfolien gebildeten Kondensator-Kapazität als Maß für das Swelling der Pouchzelle ausgewertet wird. Es hat sich als vorteilhaft herausgestellt, wenn im Rahmen des Verfahrens eine Stromentnahme aus dem Akkupack unterbrochen oder reduziert wird, wenn sich der Wert der Kondensator-Kapazität um einen vorgegebenen Schwellwert ändert.

Weitere Vorteile ergeben sich aus der folgenden Figurenbeschreibung. In den Figuren sind verschiedene Ausführungsbeispiele der vorliegenden Erfindung dargestellt. Die Figuren, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

In den Figuren sind gleiche und gleichartige Komponenten mit gleichen Bezugszeichen beziffert.

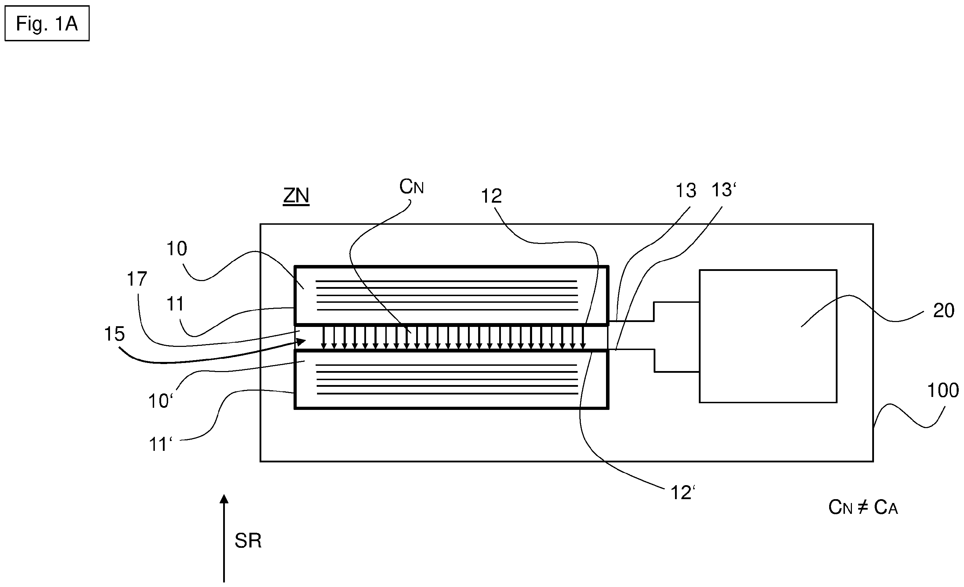

Figur 1A zeigt ein erstes bevorzugtes Ausführungsbeispiel eines erfindungsgemäßen Akkupacks in einem normalen Zustand der Pouchzellen.

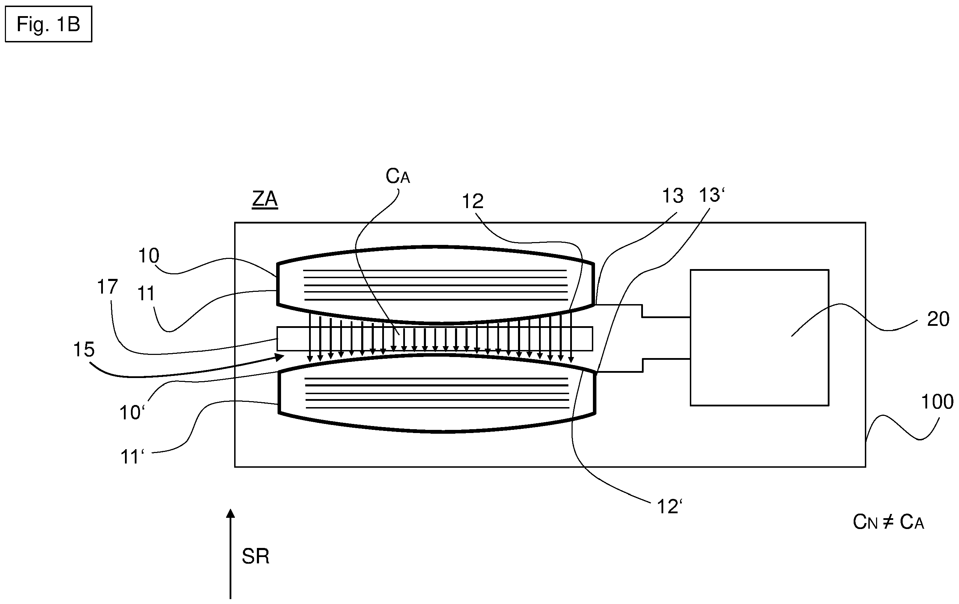

Figur 1B zeigt das erste bevorzugte Ausführungsbeispiel des erfindungsgemäßen Akkupacks in einem aufgeblähten bzw. angeschwollenen Zustand der Pouchzellen.

### Ausführungsbeispiel:

Ein bevorzugtes Ausführungsbeispiel eines erfindungsgemäßen Akkupacks ist 100 ist in Fig. 1 dargestellt.

Der Akkupack ist beispielhaft ausgestattet mit zwei in Stapelrichtung SR aufeinander gestapelten Pouchzellen 10, 10'. Jede der Pouchzellen 10, 10' ist in einer Metallfolie 11, 11' eingeschlossen. Die Metallfolien 11, 11' sind als Aluminiumverbundfolien bereitgestellt und elektrisch voneinander isoliert. Dabei sind die Metallfolien 11, 11' in Stapelrichtung durch einen Luftspalt 15 voneinander beabstandet.

Die einander zugewandten Seiten der Metallfolien 11, 11' definieren jeweils eine Elektrode 12, 12', wobei zwischen den Elektroden 12, 12' - die voneinander beabstandet und elektrisch voneinander isoliert sind - eine elektrische Kondensator-Kapazität existiert.

Der Wert der elektrischen Kondensator-Kapazität ist abhängig vom Abstand der Elektroden 12, 12' voneinander. Die soll anhand der Unterfiguren genauer erläutert werden, wobei Fig. 1A den Akkupack 100 in normalen (erwünschten) Zustand ZN zeigt, d.h. die Pouchzellen 10, 10' sind nicht aufgebläht.

Fig. 1B zeigt den Akkupack 100 in angeschwollenen (gealterten) Zustand ZA, wobei die Pouchzellen 10, 10' sichtlich in Stapelrichtung SR aufgequollen sind. Im angeschwollenen (gealterten) Zustand ZA in Fig. 1B sind die Elektroden 12, 12' beispielhaft weiter voneinander beabstandet (zumindest im Mittel weiter voneinander beabstandet) als die Elektroden 12, 12' in Fig. 1A. Somit ist die zwischen den Elektroden 12, 12' des Akkupacks 100 der Fig. 1A existierende Kondensator-Kapazität CN größer als die zwischen den Elektroden 12, 12' des Akkupacks 100 der Fig. 1B existierende Kondensator-Kapazität CA.

Diese Veränderung der Kondensator-Kapazität kann für eine Detektion eines Swellings der Pouchzellen 10, 10' ausgenutzt werden. Dafür sind die Metallfolien 11, 11' - und somit auch die Elektroden 12, 12' - jeweils elektrisch über eine elektrische Kontaktierung 13, 13' kontaktiert. Die elektrische Kontaktierung 13, 13' ist wiederum elektrisch mit einer Kapazitätsmessschaltung 20 verbunden über die die im Zuge der Zellalterung veränderliche Kondensator-Kapazität gemessen werden kann.

Wie der Fig. 1A und 1B entnommen werden kann ist in dem Luftspalt 15 zwischen den Pouchzellen 10, 10' ein zusätzliches Dielektrikum 17 eingebracht.

Es sei erwähnt, dass für das hier vorgeschlagene Messprinzip, die zwischen den Pouchzellen 10, 10' vorhandene Luft als Dielektrikum an sich bereits ausreichend sein kann. Durch das eingebrachte Dielektrikum 17 - hier beispielhaft in Form eines Kunststoffstreifens - wird die Kondensator-Kapazität im Grundsatz vorteilhaft erhöht und die Pouchzellen 10, 10' dabei gleichzeitig gegeneinander abgestützt.

### Bezugszeichenliste

- 10, 10': Pouchzelle
- 11, 11': Metallfolie
- 12, 12': Elektrode
- 13, 13': elektrische Kontaktierung
- 15: Luftspalt
- 17: Dielektrikum
- 20: Kapazitätsmessschaltung
- 100: Akkupack

- SR: Stapelrichtung
- CA: Kondensator-Kapazität bei aufgeblähter Pouchzelle
- CN: Kondensator-Kapazität bei normaler Pouchzelle
- ZA: angeschwollener Zustand
- ZN: normaler Zustand

## Patentansprüche

1. Akkupack (100) mit wenigstens zwei aufeinander gestapelten Pouchzellen (10, 10'), wobei jede der Pouchzellen (10, 10') in einer Metallfolie (11, 11') eingeschlossen ist,
**dadurch gekennzeichnet, dass** die Metallfolien (11, 11') elektrisch voneinander isoliert sind und die Metallfolien (11, 11'), zwecks Messung einer durch die Metallfolien (11, 11') gebildeten Kondensator-Kapazität (CA, CN), jeweils elektrisch kontaktiert sind.

2. Akkupack (100) nach Anspruch 1,
**dadurch gekennzeichnet, dass** der Akkupack (100) eine mit den Metallfolien (11, 11') elektrisch verbundene Kapazitätsmessschaltung (20) aufweist.

3. Akkupack (100) nach Anspruch 2,
**dadurch gekennzeichnet, dass** der Akkupack (100) ein Batteriemanagementsystem aufweist, das ausgebildet ist, eine Stromentnahme aus dem Akkupack zu unterbrechen oder zu reduziert wird, wenn sich der Wert der Kondensator-Kapazität um einen vorgegebenen Schwellwert ändert.

4. Akkupack (100) nach Anspruch 2 oder 3,
**dadurch gekennzeichnet, dass** der Akkupack (100) eine Filterschaltung aufweist, die eingerichtet ist eine durch Stoß und/oder Vibration induzierte Änderung der Kondensator-Kapazität (CA, CN) herauszufiltern.

5. Akkupack (100) nach einem der vorangehenden Ansprüche,
**dadurch gekennzeichnet, dass** die die Metallfolien (11, 11') in Stapelrichtung (SR) durch einen Luftspalt (15) voneinander beabstandet sind.

6. Akkupack (100) nach einem der vorangehenden Ansprüche,
**dadurch gekennzeichnet, dass** in den Luftspalt (15) ein Dielektrikum (17) eingebracht ist.

7. Akkupack (100) nach Anspruch 6,
**dadurch gekennzeichnet, dass** das Dielektrikum (17) ein Kunststoff ist.

8. Akkupack (100) nach einem der vorangehenden Ansprüche,
**dadurch gekennzeichnet, dass** die Metallfolien (11, 11') jeweils als Metallverbundfolie, insbesondere als Aluminiumverbundfolie bereitgestellt sind.

9. Akkupack (100) nach Anspruch 7,
**dadurch gekennzeichnet, dass** das Dielektrikum (17) Teil Metallverbundfolie ist.

10. Verfahren zum Messen des Swellings einer Pouchzelle eines Akkupacks (100) nach einem der vorangehenden Ansprüche, wobei eine Änderung der zwischen den Metallfolien (11, 11') gebildeten Kondensator-Kapazität (CA, CN) als Maß für das Swelling der Pouchzelle (10, 10') ausgewertet wird.

11. Verfahren nach Anspruch 9,
**dadurch gekennzeichnet, dass** eine Stromentnahme aus dem Akkupack (100) unterbrochen oder reduziert wird, wenn sich der Wert der Kondensator-Kapazität (CA, CN) um einen vorgegebenen Schwellwert ändert.
